# EUROPEAN PATENT SPECIFICATION

(11) **EP 2 368 752 B1**
(45) Date of publication and mention of the grant of the patent: **18.10.2017**
(21) Application number: 11001348.9
(22) Date of filing: 18.02.2011
(51) Int. Cl.: B60N 2/28, B60N 2/427, B60N 2/42

(54) **Improvements relating to vehicle child restraints**
Verbesserungen an Fahrzeugkinderrückhaltesystemen
Améliorations associées aux retenues d'enfants dans un véhicule

(30) Priority: 18.02.2010 AU 2010900684
(43) Date of publication of application: 28.09.2011
(73) Proprietor: Britax Childcare Pty Ltd., Sunshine, VIC 3020 (AU)
(72) Inventor: Lumley, Mike, 3020 Sunshine Victoria (AU)
(74) Representative: Bosch, Matthias

(56) References cited:
- EP-A1- 1 452 406
- EP-A2- 0 931 694
- DE-U1-202009 010 536
- US-A1- 2009 152 913

## Description

### FIELD OF THE INVENTION

The present invention relates to means for absorbing or deflecting impact energy as applied to vehicle child restraints (see, for example, DE 20 2009 010 536 U1, corresponding to the preamble of claim 1).

### BACKGROUND OF THE INVENTION

For the purpose of explanation, use of the present invention will be explained with reference to infant carriers of the type employed in 'travel systems', although it need not be so limited, in that it may be applied to any of the different classes or types of vehicle child restraints. Travel systems make use of an infant carrier in the form of a bassinet like capsule with a carry handle that is adapted for secure yet releasable attachment to a base. One such base is retained in an automobile so as to accommodate the child in a rearward-facing semi-recumbent position, and another forms part of a stroller.

These travel systems allow undisturbed movement of the baby from the vehicle to the stroller and back again, reducing the likelihood of waking a baby sleeping in the infant carrier.

In an automobile, the base is positioned upon a rear seat and secured thereto by way of a vehicle seat belt, for example a lap/sash belt. Typically the base is further secured by means of a tether strap extending from the base to a vehicle anchorage point on a shelf behind the rear seat and/or ISOFIX attachment points.

It is understood that the heads of very young children are particularly fragile and therefore vulnerable to impacts. In all likelihood, in use, an infant carrier will be subject to small and medium impacts (such as being unintentionally knocked against things) when remote of the vehicle, and potentially, the infant carrier may be subjected to a large impact in the event of a motor vehicle accident.

It is an object of the present invention therefore to provide a vehicle child restraint that provides a degree of protection from the dangers discussed above, or which is, at the least, a useful alternative to known vehicle child restraints of the above described type.

Other objects and advantages of the present invention will become apparent from the following description, taken in connection with the accompanying drawings, wherein, by way of illustration and example, an embodiment of the present invention is disclosed.

### SUMMARY OF THE INTENTION

The present invention accordingly provides a child restraint for a vehicle comprising a base, and an infant carrier securable to and separable from the base and the vehicle, the infant carrier comprising a shell, a carry handle moveable between a carry position and a stowed position so that an infant can be placed in and removed from the infant carrier without being impeded by the carry handle, the child restraint being characterised in that this further comprises at least one impact energy absorbing element depending from the shell, the or each impact absorbing element being positioned at or about at least an end of the shell which is for supporting the infant's head, and directed externally and away from the infant to absorb and/or redirect or deflect blows incident to the infant carrier and thereby improve protection for at least the head of the infant.

Additional features of the invention are disclosed in the dependent claims.

In one form, the infant carrier comprises a pair of side edges and a top edge at the head supporting end thereof, and an impact absorbing element is positioned on or along any one or more or all of these edges.

In one form, an externally directed impact absorbing element extends right around a periphery of the infant carrier.

In one form, a plurality of impact absorbing elements are positioned at a plurality of locations extending right around a periphery of the infant carrier.

In one form, there is an impact absorbing element secured to an externally directed portion of the base.

In one form, the or each impact absorbing element is adapted to absorb impact by means of any one or more of plastically or elastically deforming, cushioning, crushing, rupturing, deflating or bursting.

In one form, the impact absorbing element comprises any one or more of a hollow and/or gas, liquid, gel or other energy absorbing material filled shell of deformable or cellular material.

In one form, the shell has a thin wall of plastic material.

In one form, the shell may be either of rigid or soft and pliable, and may incorporate one or more apertures therein that facilitate the release of any fluids inside of the shell when this is subjected to an impact.

In one form, the shell bursts when subjected to an impact, said bursting permitting the release of fluids inside of the shell.

In one form, the shell contains an element made of an open cell foam.

In one form, the shell contains an element made of a closed cell foam.

### BRIEF DESCRIPTION OF THE DRAWINGS

For a better understanding of this disclosure it will now be described with respect to an exemplary embodiment which shall be described herein with the assistance of drawings wherein:
Figure 1 is a side view of an infant carrier;
Figure 2 is a top view of the infant carrier in Figure 1;
Figure 3 is an end view of the infant carrier illustrated in Figures 1 and 2, viewed from the head supporting end thereof;
Figures 4 through 13 are cross-sectional views through various, alternative embodiments of impact absorbing elements attachable to the infant carrier illustrated in Figures 1 through 3;
Figure 14 is a side view of an infant carrier according to a further exemplary embodiment;
Figure 15 is a side view of the infant carrier in Figure 14;
Figure 16 is an end view of the infant carrier illustrated in Figures 14 and 15, viewed from the head supporting end thereof;
Figure 17 is a side view of an infant carrier according to a further exemplary embodiment; and
Figure 18 is a sectional view through an impact absorbing module according to a further embodiment.

In the following description, like reference characters designate like or corresponding parts throughout the several views of the drawings.

### DETAILED DESCRIPTION OF AN EMBODIMENT OF THE INVENTION

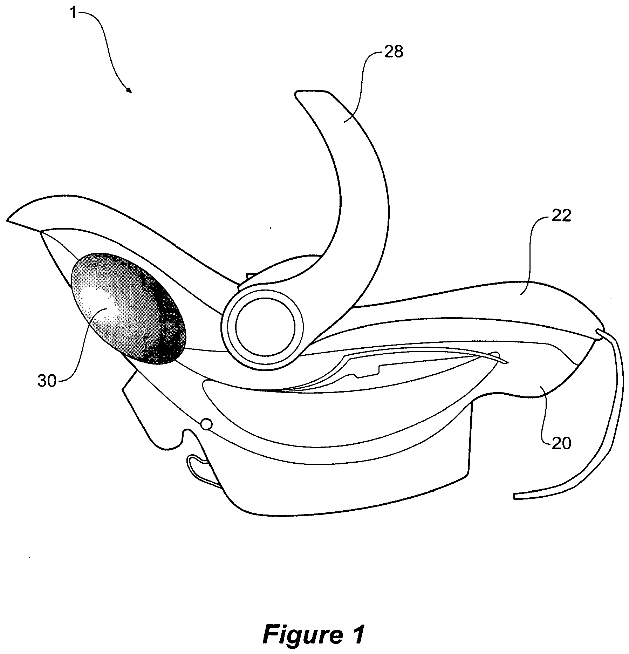

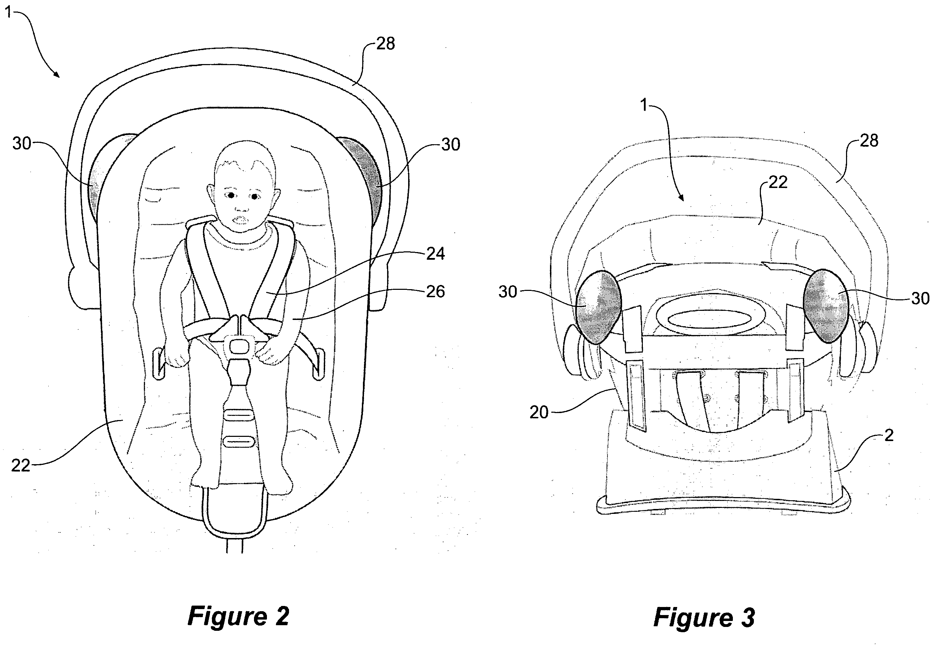

Referring now to Figures 1 through 3, where there is illustrated an infant carrier 1 which is removably securable to a base 2 (see Figure 3) via a releasable catch mechanism so as to form a child restraint for a vehicle. In use, the base 2 is positioned upon a rear seat of the vehicle and is secured to the vehicle by means of a vehicle seat belt, preferably a combined lap/sash seat belt.

The infant carrier 1 comprises a shell 20 of moulded plastic having an outerside, and an innerside lined with suitable padding and lining materials 22. The innerside of the infant carrier 1 further comprises a five point harness 24 (see Figure 2) for releasably securing an infant (or small child) 26 in the infant carrier 1.

The infant carrier 1 further comprises a carry handle 28 that can be rotated between a carry position (as illustrated in Figures 1 and 3), and a stowed position (as illustrated in Figure 2) which positions the carry handle 28 out of the way, so that an infant can be placed in and removed from the infant carrier 1 without this being impeded by the carry handle 28.

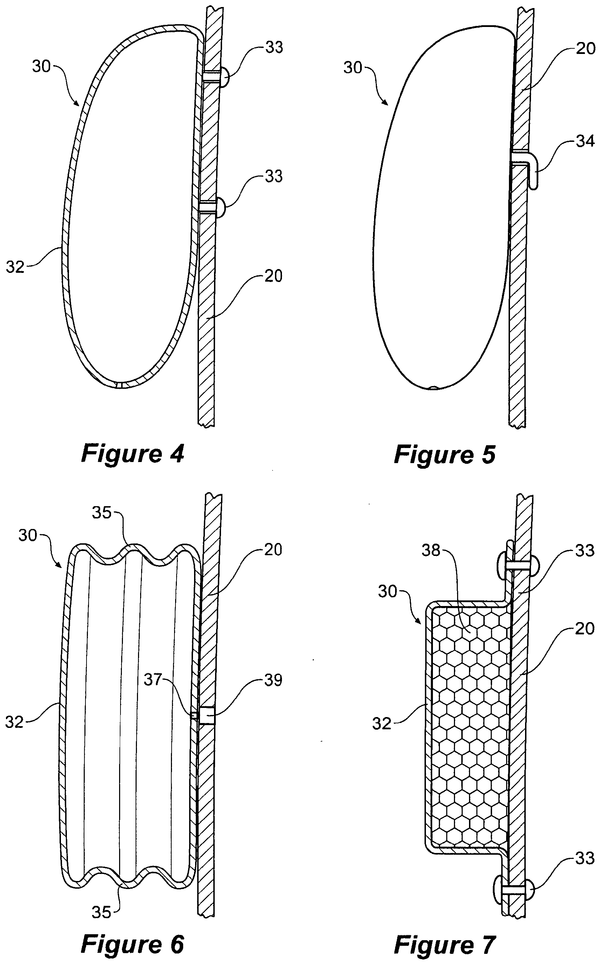

Depending from each of a pair of opposing sides of the outerside of the infant carrier 1 at a head supporting end thereof is an outwardly directed (i.e. away from an innerside and any occupant) impact absorbing element 30 adapted to absorb and/or redirect or deflect blows incident to the infant carrier 1 and thereby improve protection for at least the head of the child occupying the infant carrier 1. In this exemplary embodiment, the impact absorbing element 30 is a hollow, plastic blow moulded item that is secured to the outerside of the shell 20 of the infant carrier 1 via plastic clips 33 (as per Figure 4) or tabs 34 (as per Figure 5).

The thin shell 32 of the impact absorbing elements 30 may be any one of hollow, partially or fully gas, liquid or gel filled, or contain or be filled with an energy absorbing material such as a foamed plastic or cellular material or the like. Further still, a combination of fillings may be employed.

The thin shell 32 may be shaped so as to cause incident impact objects that may be flying about the vehicle in the case of an impact to be redirected or deflected away from the infant carrier 1, reducing the likelihood that these objects will cause injury to the occupant of the infant carrier 1.

Referring now to Figure 6, where it can be seen that in one form, the shell 32 of the or each impact absorbing element 30 may be shaped so as to incorporate features that aid in impact absorption or redirection. In this case, shell 32 incorporates side walls 35 having the general shape of a sinusoidal wave form, whereupon at least some of the energy imparted by the collision of an incident object will cause the side walls 35 to be compressed with a 'concertina' affect. Moreover, there are aligned apertures 37 and 39 in both the shells of both the impact absorbing element 30 and infant carrier 20 respectively, so that some of any extant air in the shell 32 can be released in a controlled fashion as the impact absorbing elements 30 are compressed by the incident impact.

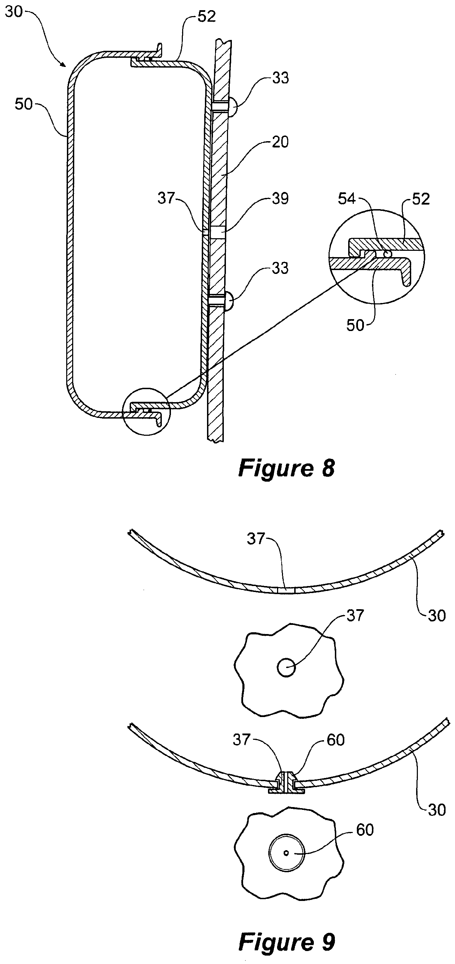

Referring now to Figure 7, where it can be seen that in one form, the impact absorbing elements 30 comprise a thin shell 32 filled with a material 38 having an energy absorbing honeycomb structure. Referring now to Figure 8, where it can be seen that in one form, the shell 32 of the impact absorbing elements 30 may be formed from multiple (in this case 2) parts 50 and 52 which are adapted to move relative to one another and thereby absorb impact energy. Similar to the embodiment of Figure 6, there are aligned apertures in both one part 52 of the element shell 32 and the infant carrier shell 20, so that some of any air in the shell 32 can be released in a controlled fashion as the elements 30 are compressed by the incident impact. A seal 54 is retained between shell 30 parts 50 and 52 to restrict the escape of air at the point at which the portions 50 and 52 overlap.

With reference to Figure 9, where it is illustrated how it is that a valve 60 may be used to fill the aperture 37 in the shell 32. Such a valve may be used to seal the shell 32 or otherwise precisely control the release of fluid (particularly gas) or otherwise sacrificially rupture when the element 30 is compressed by impact.

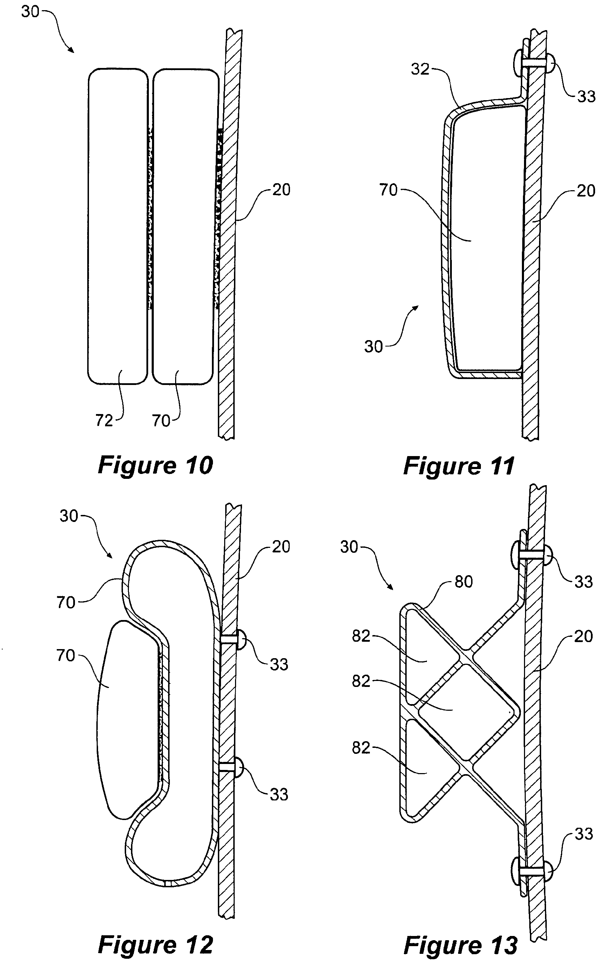

Referring now to Figures 10 and 12, where it can be seen that in one form, the impact absorbing elements 30 may comprise multiple (in this case 2) energy absorbing cushion elements 70 and 72 mounted one atop of the other (alternatively, they may be side by side). In this way, the properties of the two cushion elements 70 and 72 may be varied as required, so that either of these is more or less impact energy absorbing than the other for instance.

Referring now to Figure 11, where it can be seen that in one form, the impact absorbing elements 30 comprise a shell 32 that extends over a cushion element 70. In this way, the shell 32 may protect the cushion element 70 from damage, and the cushion element 70 may provide the majority of the impact energy absorption.

Referring now to Figure 13, where it can be seen that in one form, the impact absorbing elements 30 are integrally formed energy absorbing structures 80, defining, in this embodiment, a cross-section that is comprised of a plurality of triangular apertures 82. In use, the structure 80 is adapted to be crushed and thereby absorb incident impact energy.

By providing an infant carrier 1 with impact absorbing elements 30 located about the head support end of the carrier 1 in particular, the carrier 1 will provide improved protection for the infant, from both incidental bumps when the carrier 1 is being carried, and major impacts that may result from motor vehicle accidents.

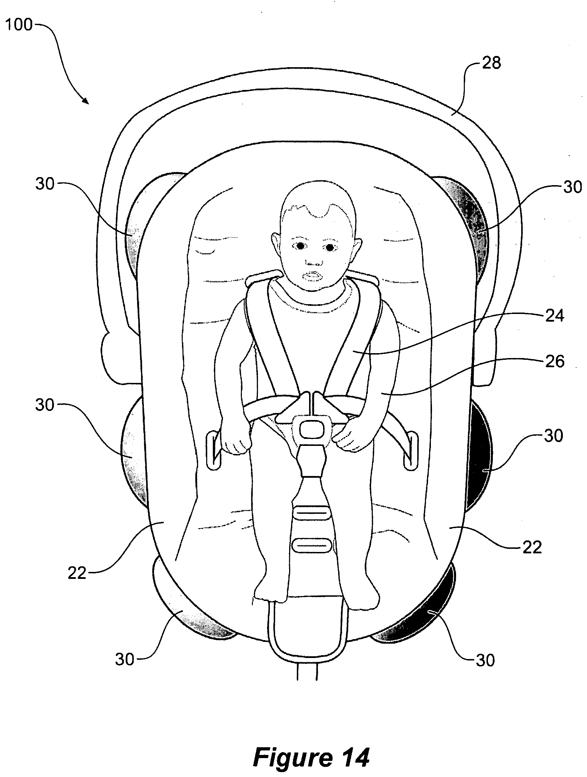

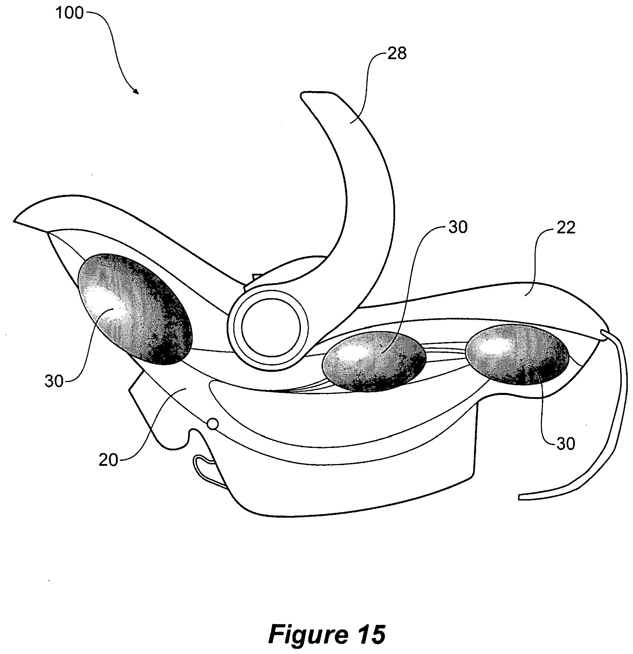

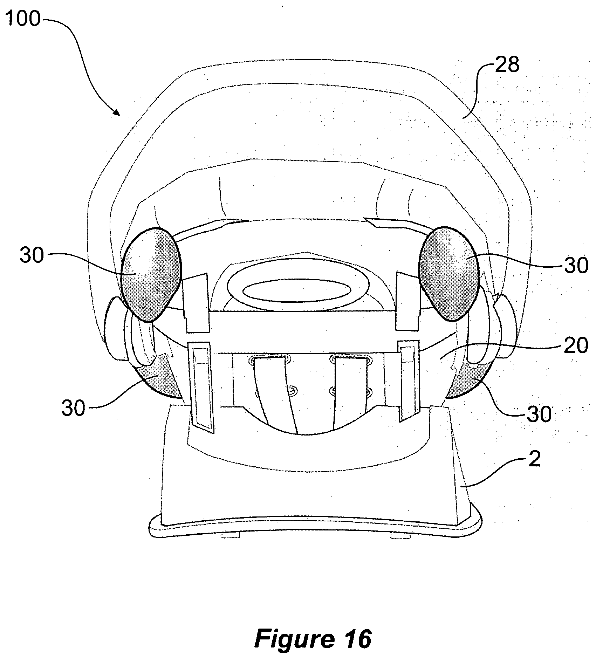

Referring now to Figures 14 through 16, where there is illustrated an infant carrier that is substantially the same as infant carrier 1 discussed above, with the exception that there are six (three each side) externally directed (i.e. directed away from the occupant) impact absorbing elements 30 depending from this infant carrier 100. Two of these impact absorbing elements 30 are located about the periphery of the head supporting end of the infant carrier 100, a further two are located about the periphery of the legs and feet supporting end of the infant carrier 100, and the remaining two are located along the sides of infant carrier 100, between those at the head and feet supporting ends, this being about adjacent the position of an occupant's pelvis.

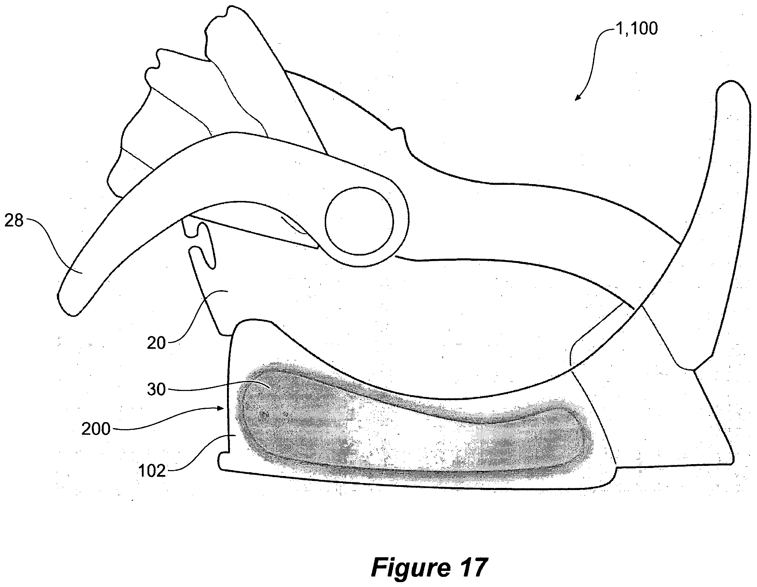

Referring now to Figure 17, where there is illustrated a base 200 of the type to which either of infant carriers 1 or 100 discussed above can be removably secured. This base 100 comprises a pair of major opposing sides 102, where there is an impact absorbing element 30 secured to each of these sides 102.

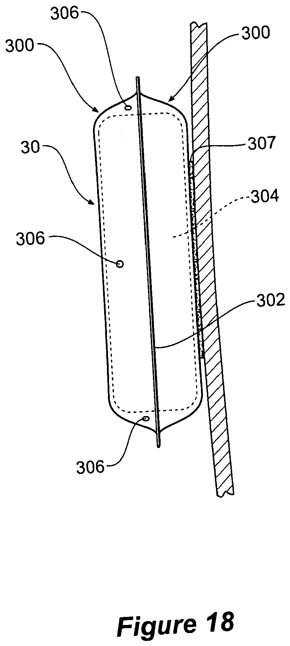

Referring now to Figure 18, where there is illustrated an impact absorbing element 30 comprised of two sheets of soft, pliable plastic material 300 secured together (such as by welding or use of adhesives) around matching perimeters 302 thereof so as to create a casing for a piece of open cell (i.e. sponge-like) foam 304 (or any suitable material having similar properties). The casing is then secured to the external shell 20 of the infant carrier 1 or 100 using an adhesive or adhesive strip or the like.

An advantage of open cell foam is that it gives the impact absorbing element 30 some shape and volume, and the open cell structure contains gas that can be expelled when impacted upon, so as to slow down the rate of compression of the impact absorbing element 30. This gas (air) may be released from the casing through one or more apertures 306 formed in sheets 300, or alternatively, by bursting a casing deficient of such release apertures 306.

In an alternative, a closed cell foam may be used to vary the energy absorbing properties of the impact absorbing element 30, as aside form its inherent properties, a closed cell foam may not contain as much gas for release when impacted upon.

In a further alternative, the foam element may be surrounded with additional air (i.e. the casing may be slightly pressurised), so as to provide a composite method for absorbing impact energy.

It will be understood that the term "comprise" and any of its derivatives (e.g. comprises, comprising) as used in this specification is to be taken to be inclusive of features to which it refers, and is not meant to exclude the presence of any additional features unless otherwise stated or implied.

The reference to any prior art in this specification is not, and should not be taken as, an acknowledgement of any form of suggestion that such prior art forms part of the common general knowledge.

Although an illustrative embodiment of the present invention has been described in the foregoing detailed description, it will be understood that the invention is not limited to the embodiment disclosed, but is capable of numerous rearrangements, modifications and substitutions if not thereby departing from the scope of the invention as set forth and defined by the following claims.

## Claims

1. A child restraint for a vehicle comprising a base (2), and an infant carrier (1) securable to and separable from the base (2) and the vehicle, the infant carrier (1) comprising a shell (20), a carry handle (28) moveable between a carry position and a stowed position so that an infant can be placed in and removed from the infant carrier (1) without being impeded by the carry handle (28), the child restraint further comprising at least one impact energy absorbing element (30) depending from the shell (20), **characterised by** the or each impact absorbing element (30) being positioned at or about at least an end of the shell (20) which is for supporting the infant's head, and directed externally and away from the infant to absorb and/or redirect or deflect blows incident to the infant carrier (1) and thereby improve protection for at least the head of the infant.

2. The child restraint of claim 1, wherein the infant carrier (1) comprises a pair of side edges and a top edge at the head supporting end thereof, and an impact absorbing element (30) is positioned on or along any one or more or all of these edges.

3. The child restraint as in either of the preceding claims, wherein an externally directed impact absorbing element (30) extends right around a periphery of the infant carrier (1).

4. The child restraint as in any one of claims 1 through 3, wherein a plurality of impact absorbing elements (30) are positioned at a plurality of locations extending right around a periphery of the infant carrier (1).

5. The child restraint as in any one of the preceding claims, wherein there is an impact absorbing element (30) secured to an externally directed portion of the base (2).

6. The child restraint as in any one of the preceding claims, wherein the or each impact absorbing element (30) is adapted to absorb impact by means of any one or more of plastically or elastically deforming, cushioning, crushing, rupturing, deflating or bursting.

7. The child restraint as in any one of the preceding claims, wherein the impact absorbing element (30) comprises any one or more of a hollow and/or gas, liquid, gel or other energy absorbing material filled shell (32) of deformable or cellular material.

8. The child restraint of claim 7, wherein the shell (32) has a thin wall of plastic material.

9. The child restraint as in either of claims 7 or 8, wherein the shell (32) may be either of rigid or soft and pliable, and may incorporate one or more apertures therein that facilitate the release of any fluids inside of the shell when this is subjected to an impact.

10. The child restraint as in either of claims 7 or 8, wherein the shell (32) bursts when subjected to an impact, said bursting permitting the release of fluids inside of the shell.

11. The child restraint as in any one of claims 7 through 10, wherein the shell (32) contains an element made of an open cell foam.

12. The child restraint as in any one of claims 7 through 10, wherein the shell (32) contains an element made of a closed cell foam.

## Patentansprüche

1. Kinderrückhaltevorrichtung mit einer Basis (2) und einem Kindersitz (1), der an der Basis (2) und dem Fahrzeug befestigbar und davon abnehmbar ist, wobei der Kindersitz (1) eine Schale (20) und einen Tragegriff (28) aufweist, der zwischen einer Trageposition und einer Verstauposition bewegt werden kann, so dass ein Kind in den Kindersitz (1) gesetzt und herausgenommen werden kann, ohne von dem Tragegriff (28) behindert zu werden, wobei die Kinderrückhaltevorrichtung des Weiteren wenigstens ein stoßenergieabsorbierendes Element (30) aufweist, das von der Schale (20) herunterhängt,
**dadurch gekennzeichnet, dass**
das oder jedes stoßabsorbierende Element (30) an oder um wenigstens ein Ende der Schale (20) herum positioniert ist, das zum Stützen des Kopfs des Kindes vorgesehen ist, und nach außen und von dem Kind weg gerichtet ist, um Stöße, die auf den Kindersitz (1) einwirken, zu absorbieren und/oder umzuleiten oder abzulenken, und dadurch den Schutz zumindest für den Kopf des Kindes zu verbessern.

2. Kinderrückhaltevorrichtung nach Anspruch 1, wobei der Kindersitz (1) ein Paar von Seitenkanten und eine Oberkante an dem Kopfstützenende aufweist, und ein stoßabsorbierendes Element (30) an oder entlang einer oder mehrerer oder aller dieser Kanten positioniert ist.

3. Kinderrückhaltevorrichtung nach einem der vorhergehenden Ansprüche, wobei sich ein nach außen gerichtetes stoßabsorbierendes Element (30) genau um einen Umfang des Kindersitzes (1) herum erstreckt.

4. Kinderrückhaltevorrichtung nach einem der Ansprüche 1 bis 3, wobei eine Vielzahl von stoßabsorbierenden Elementen (30) an einer Vielzahl von Stellen positioniert sind, die sich genau um einen Umfang des Kindersitzes (1) herum erstrecken.

5. Kinderrückhaltevorrichtung nach einem der vorhergehenden Ansprüche, wobei ein stoßabsorbierendes Element (30) an einem nach außen gerichteten Abschnitt der Basis (2) befestigt ist.

6. Kinderrückhaltevorrichtung nach einem der vorhergehenden Ansprüche, wobei das oder jedes stoßabsorbierende Element (30) dazu ausgelegt ist, Stöße mittels eines oder mehreren von plastischem oder elastischem Verformen, Dämpfen, Stauchen, Reißen, Entleeren oder Bersten zu absorbieren.

7. Kinderrückhaltevorrichtung nach einem der vorhergehenden Ansprüche, wobei das stoßabsorbierende Element (30) eines oder mehrere einer hohlen und/oder mit Gas, Flüssigkeit, Gel oder einem anderen energieabsorbierenden Material gefüllten Schale (32) aus verformbarem oder zellularem Material aufweist.

8. Kinderrückhaltevorrichtung nach Anspruch 7, wobei die Schale (32) eine dünne Wand aus Kunststoffmaterial hat.

9. Kinderrückhaltevorrichtung nach einem der Ansprüche 7 oder 8, wobei die Schale (32) entweder starr oder weich und biegsam sein kann und eine oder mehrere Öffnungen haben kann, die das Freigeben möglicher Flüssigkeiten in der Schale erleichtern, wenn sie einem Stoß ausgesetzt ist.

10. Kinderrückhaltevorrichtung nach einem der Ansprüche 7 oder 8, wobei die Schale (32) birst, wenn sie einem Stoß ausgesetzt ist, wobei das Bersten das Freigeben von Flüssigkeiten in der Schale ermöglicht.

11. Kinderrückhaltevorrichtung nach einem der Ansprüche 7 bis 10, wobei die Schale (32) ein Element aus einem offenzelligen Schaum aufweist.

12. Kinderrückhaltevorrichtung nach einem der Ansprüche 7 bis 10, wobei die Schale (32) ein Element aus einem geschlossenzelligen Schaum aufweist.

## Revendications

1. Système de maintien d'enfant pour un véhicule comprenant une base (2), et un support (1) de nourrisson fixable à et séparable de la base (2) et au et du véhicule, le support (1) de nourrisson comprenant une coque (20), une poignée de transport (28) mobile entre une position de transport et une position arrimée de telle sorte qu'un nourrisson peut être placé dans le et sorti du support (1) de nourrisson sans être gêné par la poignée de transport (28), le système de maintien d'enfant comprenant en outre au moins un élément (30) d'absorption d'énergie d'impact dépendant de la coque (20),
**caractérisé par** le ou chaque élément (30) d'absorption d'impact étant positionné au niveau ou à proximité d'au moins une extrémité de la coque (20) qui vise à supporter la tête du nourrisson, et dirigé vers l'extérieur et à l'écart du nourrisson pour absorber et/ou rediriger ou dévier des chocs incidents sur le support (1) de nourrisson et ainsi améliorer la protection pour au moins la tête du nourrisson.

2. Système de maintien d'enfant selon la revendication 1, dans lequel le support (1) de nourrisson comprend une paire de bords latéraux et un bord supérieur au niveau de l'extrémité supportant la tête de celui-ci, et un élément (30) d'absorption d'impact est positionné sur ou le long d'un quelconque ou plus ou de la totalité de ces bords.

3. Système de maintien d'enfant selon l'une ou l'autre des revendications précédentes, dans lequel un élément (30) d'absorption d'impact dirigé vers l'extérieur s'étend exactement autour d'une périphérie du support (1) de nourrisson.

4. Système de maintien d'enfant selon l'une quelconque des revendications 1 à 3, dans lequel une pluralité d'éléments (30) d'absorption d'impact sont positionnés en une pluralité d'emplacements s'étendant exactement autour d'une périphérie du support (1) de nourrisson.

5. Système de maintien d'enfant selon l'une quelconque des revendications précédentes, dans lequel il y a un élément (30) d'absorption d'impact fixé à une partie dirigée vers l'extérieur de la base (2).

6. Système de maintien d'enfant selon l'une quelconque des revendications précédentes, dans lequel le ou chaque élément (30) d'absorption d'impact est adapté à absorber un impact au moyen d'un(e) quelconque ou plus parmi une déformation plastique ou élastique, un effet coussin, un écrasement, une rupture, un dégonflement ou un éclatement.

7. Système de maintien d'enfant selon l'une quelconque des revendications précédentes, dans lequel l'élément (30) d'absorption d'impact comprend un quelconque ou plus parmi un évidement et/ou une coque (32) remplie d'un gaz, d'un liquide, d'un gel ou autre matériau d'absorption d'énergie d'un matériau déformable ou cellulaire.

8. Système de maintien d'enfant selon la revendication 7, dans lequel la coque (32) a une paroi mince de matériau plastique.

9. Système de maintien d'enfant selon l'une ou l'autre des revendications 7 ou 8, dans lequel la coque (32) peut être l'un ou l'autre parmi rigide ou souple et pliable, et peut incorporer une ouverture ou plus dans celle-ci qui facilite(nt) la libération de fluides quelconques à l'intérieur de la coque lorsque celle-ci est soumise à un impact.

10. Système de maintien d'enfant selon l'une ou l'autre des revendications 7 ou 8, dans lequel la coque (32) éclate lorsqu'elle est soumise à un impact, ledit éclatement permettant la libération de fluides à l'intérieur de la coque.

11. Système de maintien d'enfant selon l'une quelconque des revendications 7 à 10, dans lequel la coque (32) contient un élément constitué d'une mousse à cellules ouvertes.

12. Système de maintien d'enfant selon l'une quelconque des revendications 7 à 10, dans lequel la coque (32) contient un élément constitué d'une mousse à cellules fermées.
